# EUROPÄISCHE PATENTSCHRIFT

(11) **EP 3 723 976 B1**
(45) Veröffentlichungstag und Bekanntmachung des Hinweises auf die Patenterteilung: **15.11.2023**
(21) Anmeldenummer: 18830382.0
(22) Anmeldetag: 17.12.2018
(51) Int. Cl.: B32B 5/02, B32B 9/00, B32B 15/14, B32B 15/16, B32B 15/18

(54) **ARMIERUNG FÜR ZEMENT- UND STAHL-BASIERTE STRUKTUREN**
REINFORCEMENT FOR CEMENT- AND STEEL-BASED STRUCTURES
ARMATURE POUR STRUCTURES À BASE DE CIMENT ET D'ACIER

(30) Priorität: 17.12.2017 DE 202017006477 U
(43) Veröffentlichungstag der Anmeldung: 21.10.2020
(73) Patentinhaber: Kuse, Kolja, 81925 München (DE); TechnoCarbon Technologies France SAS, 75018 Paris (FR)
(72) Erfinder: KUSE, Kolja, 81925 München (DE); SAVARESE, Stephan, 75018 Paris (FR)
(86) Internationale Anmeldenummer: PCT/EP2018/000563
(87) Internationale Veröffentlichungsnummer: WO 2019/115013

(56) Entgegenhaltungen:
- EP-B1- 1 062 092
- WO-A1-2009/129839
- WO-A1-2013/026566
- WO-A1-2014/086481

## Beschreibung

Stahlbeton ist eine Verbindung aus zement-basierter Mineralienmischung und einer Bewehrung aus Stahl, um der mineralischen Komponente die fehlende Zugstabilität zu geben.

Dieser Umstand führt dazu, dass die mineralische Komponente Druck aufnehmen kann, ohne zu brechen oder durch statische oder dynamische Last zu versagen. Erst dadurch wird das Material fähig im Baubereich für den Bau von Gebäuden, Brücken und anderen Bauwerken und deren Bauteile, wie zum Beispiel fix-fertig fabrizierte Träger, Wände, Decken, Böden oder auch Bahnschwellen eingesetzt zu werden.

Die Verbindung funktioniert deshalb hervorragend unter sich ändernden Temperaturverhältnissen, denen Bauwerke im Betrieb in der Regel ausgesetzt sind, weil die Temperaturausdehnungskoeffizienten mit ca. 10-12 × 10⁻⁶/K von Stahl und Beton quasi identisch sind.

Aus verschiedenen Gründen hat die Stahleinlage ihre Grenzen, einerseits, was die Langlebigkeit betrifft, andererseits ist Stahl wegen der hohen CO₂-Emissionen bei der Herstellung von Rohstahl als Massenanwendung in die Kritik der Klimaforschung geraten, da etwa 50% allen produzierten Stahls heute im Bausektor in Form von Bewehrungsmaterial für Beton verwendet wird.

Im Unterschied zum Stahl können auch andere zugstabile Materialien als Bewehrung zum Einsatz kommen, die weniger energie- und CO₂-intensiv sind, die hervorragende Pass-Form der Eigenschaften von Stahl mit dem Beton sind jedoch mit anderen Materialien schwer zu erreichen.

Aus diesem Grund geht die hier vorgeschlagene Erfindung einen Schritt weiter, um Materialien einen Weg zu bereiten Stahl in Betonstrukturen zu ersetzen und dabei umweltfreundlicher zu werden, ohne disruptiv gleichzeitig zu viele Industrien in Frage zu stellen, um das CO₂ - Problem zu lösen. Zunächst soll nur der Stahl als Bewehrung für Beton ersetzt werden.

Die Erfindung basiert auf den vorausgegangenen zum Patent erteilten Erfindungen Fasermaterialien zu nutzen um Steinmaterialien aller Art zu stabilisieren. Hierbei handelt es sich um die EP 106 20 92, in der beschrieben wird, wie Steinmaterialien so, wie sie die Natur hervorbringt, durch die Bewehrung mit Hilfe von Carbonfasern flexibilisiert werden können. Stein und Carbon haben die perfekt passenden Eigenschaften, um in einem weitern Temperaturbereich stabil zu bleiben, ohne sich zu trennen. Die weitergehende Erfindung EP 08 850 003.8 beschreibt, warum das funktioniert. Die Porosität des Steins gleicht die unterschiedlichen Ausdehnungskoeffizienten durch die Volumenkomprimierbarkeit aus, solange der Stein unter Druck-Vorspannung steht. Dies äußert sich in Form von Flexibilität.

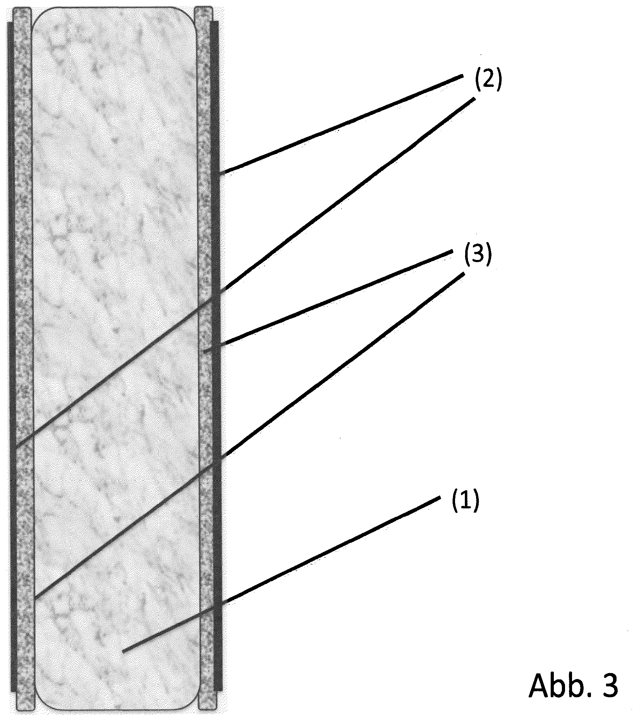

Die WO 2013/026566 A1 beschreibt Strukturen, die aus Carbon und Basaltgestein bestehen, sogar Basalt hat die nötige Flexibilität, um mit der Carbonfaser in einem weiten Temperaturbereich stabil und gerade zu bleiben, ohne dass die Steinschicht sich von der Carbonschicht löst, obwohl Basalt ein eher unflexibler Naturstein ist. Wegen der unterschiedlichen Temperaturausdehnungskoeffizienten ist in dieser Erfindung zwischen den Carbonfaserstein-Strukturen und dem Beton Auflager mit Dehnungsfugen eingebaut, wie Abb.3 zeigt. Der Ausdehnungskoeffizient der stabilisierenden Faserschicht ist kleiner als der des direkt in Verbindung stehenden Basaltgesteins.

Das gleiche gilt für die beiden Patentanmeldungen WO2014/086481 A1 und WO 2009/129839 A1, der Temperaturausdehnungskoeffizient der Faserschicht ist jeweils kleiner oder ähnlich dem des zu stabilisierenden Steinmaterials.

Die vorliegende Erfindung hingegen beschreibt ein Zwischenmaterial, welches einen Temperaturausdehnungskoeffizienten hat, der zwischen dem der zusammenzuführenden Materialien liegt, wobei diese Zwischenschicht eine flexible Struktur hat, die auf dessen Volumenkompressibilität aufgrund von Porosität beruht.

Die hier beschriebene neue Erfindung geht demnach einen Schritt weiter und betrachtet die Elastizitäts-Module verschiedener Materialien nicht nur unter Druck, sondern auch unter Zugbelastung, da zum Beispiel Naturstein eine viel höhere Zugbelastbarkeit hat, als Zement oder Beton. Naturstein zum Beispiel hat nicht nur ein spezifisches Gewicht gleich dem von Aluminium, was überrascht, noch überraschender ist, dass er in etwa auch die gleiche Steifigkeit bzw. Elastizitätsmodul hat, je nach Granitsorte zwischen 40 und 90GPa. Reines Aluminium liegt bei 70GPa.

Diese relativ hohe Flexibilität ist ohne Bruch nutzbar, solange im Druckbereich die Druckbelastbarkeitsgrenze und im Zuglastfall die Zugbelastbarkeitsgrenze des Steins nicht überschritten wird. Die hier genutzte Erkenntnis beinhaltet, dass der Stein nicht nur volumenkomprimierbar ist, so wie in der EP 08 850 003.8 beschrieben, sondern innerhalb seiner Streckgrenzen auch volumenexpandiert werden kann, ohne zu brechen.

Mit dieser inhärenten Flexibilität ausgestattet, wird der Stein zum Mediator von Materialien mit unterschiedlichen Ausdehnungskoeffizienten, da er einen Ausdehnungskoeffizienten hat, der zum Beispiel genau zwischen dem von Carbon und Beton liegt. Das gleiche gilt aber damit auch für Stahl. Der Stein kann also nicht nur der Mittler zwischen Beton und Carbonfasern dienen, sondern auch als Mediator zwischen Carbonfasern und Stahl. Diese Eigenschaft wird zum Beispiel für die Sanierung von Brücken interessant, nicht nur solchen aus Beton, sondern auch solchen aus Stahl. Damit wird der Stein zum Mittler der Verbindung von unterschiedlichen Materialien mit unterschiedlichen Temperaturausdehnungskoeffizienten, der aufgrund seiner Volumenkomprimierbarkeit unter Druck, und der relativ hohen Dehnbarkeit unter Zug, die durch die Faser kontrolliert wird, die Kraftübertragung meistert, ohne Haarrisse zu bilden, auch und insbesondere dann nicht, wenn große Temperaturwechsel die Verbindung mechanisch beanspruchen. Damit wird es möglich Carbon-Langfasern in Beton- und Stahlstrukturen zu bringen, ohne dass der Gesamtverbund sich an irgendeiner Stelle von seinem jeweiligen Verbundpartner im Fall von großen Temperaturänderungen löst. Der Temperaturausdehnungskoeffizient von Carbon-Langfasern liegt bei etwa 1 × 10⁻⁶/K und der von Beton je nach Betonsorte zwischen 10 bis 12 × 10⁻⁶/K. Wählt man den Stein-Mediator mit einem Ausdehnungskoeffizienten, der zwischen 5 und 6 × 10⁻⁶/K liegt, was bei den meisten Natursteinen der Fall ist, ist es möglich den Beton in einem Temperaturbereich zwischen - 40°C und 80°C zu stabilisieren, ohne dass an irgendeiner Grenzschicht Überlasten durch unterschiedliche Längenänderung entstehen, die zum Abreißen der Haftverbindungen zwischen den Materialien führt. Damit ist die dauerhafte Verbindung zwischen Carbon-Langfasern und Beton oder Stahl hergestellt.

Die vorgeschlagene Verbindung ist unter anderem auch einsatzfähig für die Sanierung von Brücken aus Beton oder Stahl, die durch einen aufgeklebten Untergurt aus Stein-Carbon wieder dauerhaft haltbar gemacht werden können.

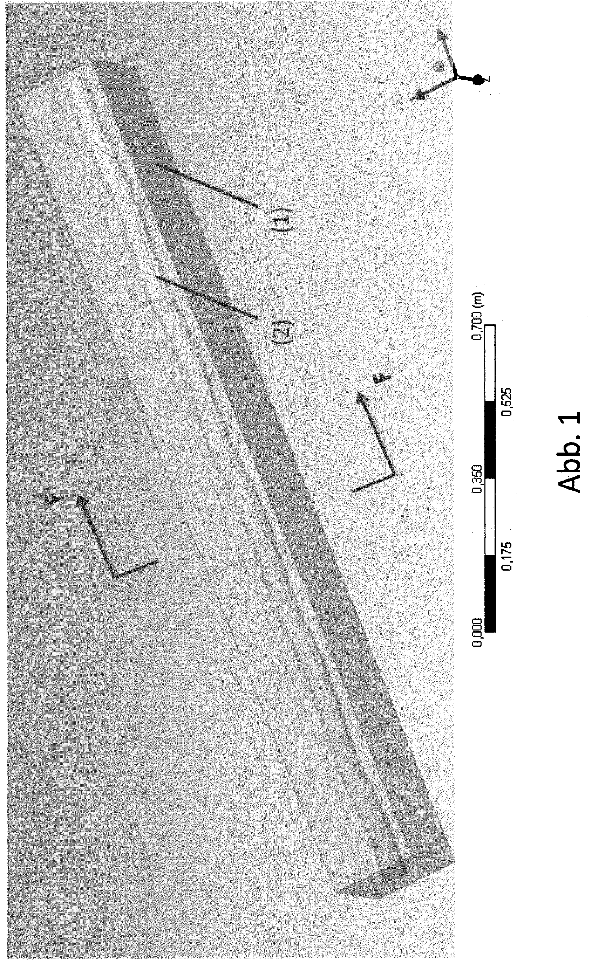

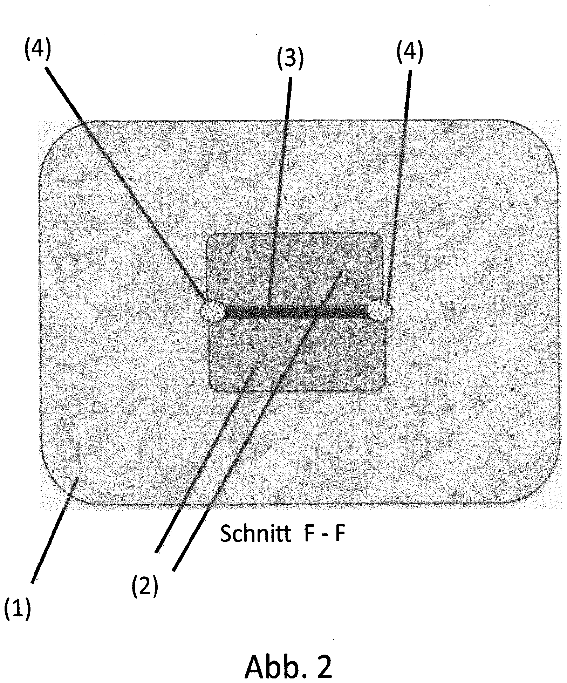

Abbildungen 1 und 2 zeigen ein Betonmodul (1), welches mit einem Streifen aus faserbeschichtetem Granit (2) stabilisiert ist, wobei die Carbon-Faserschicht (3), die zwischen den beiden Steinschichten angeordnet ist, keinen oder kaum direkten Kontakt zum Beton hat. Die Dicke der Steinschicht bestimmt den Temperaturbereich, in dem eine Ablösung der Schichten dem Stress der sich unterschiedlich ausdehnenden Materialien nicht überschritten wird. Der verträgliche Temperaturbereich ist umso grösser, je grösser das Verhältnis der Stärke der Steinschichten in Relation zur Stärke der Carbonschicht. Die Carbonschicht wird an den Stirnflächen gegebenenfalls durch einen elastischen Abstandhalter (4) in der Nut (5) getrennt, um auch an diesem Punkt den Abriss der Materialien Carbon und Beton zu vermeiden, der ein Ausgangspunkt für fortschreitende Schädigung sein könnte. Durch eine entsprechende Wellung der Carbon-Stein-Struktur und die damit mögliche Streckung der Carbonstruktur kann der unkritische Temperaturbereich stark erhöht und der Kraftschuss zwischen Stein und Beton in unterschiedlichen Spannungszuständen optimiert werden.

Abbildung 3 zeigt den Querschnitt einer flächige Anordnung, wie zum Beispiel einer Wand, in der die Betonstruktur (1) in zwei mit Carbon (2) beschichtete Steinplatten (3) eingeschlossen ist. Auch hier wird der direkte Kontakt zwischen Beton und Carbon-Langfaser durch eine entsprechend stark ausgelegte Steinschicht mechanisch getrennt.

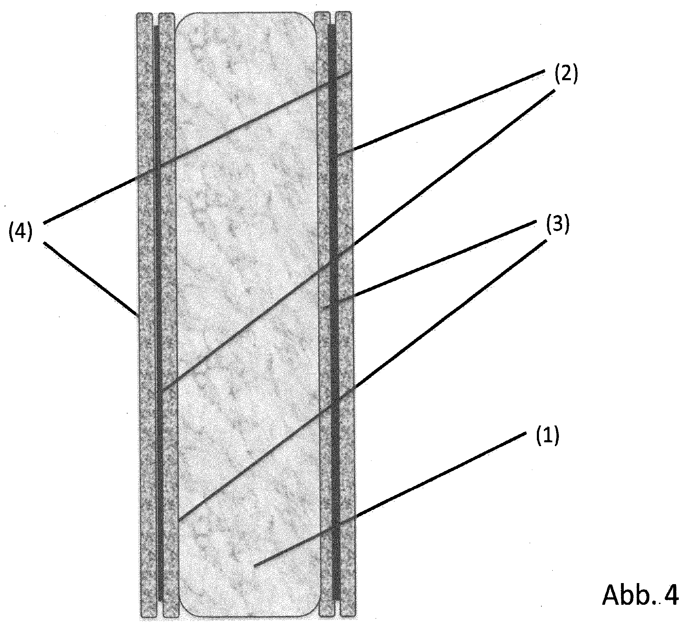

Abbildung 4 zeigt die gleiche Struktur wie Abbildung 3, jedoch mit einer weiteren Schicht (4) aus Stein, welche die Carbonschicht vor Witterungseinflüssen und UV-Licht schützt.

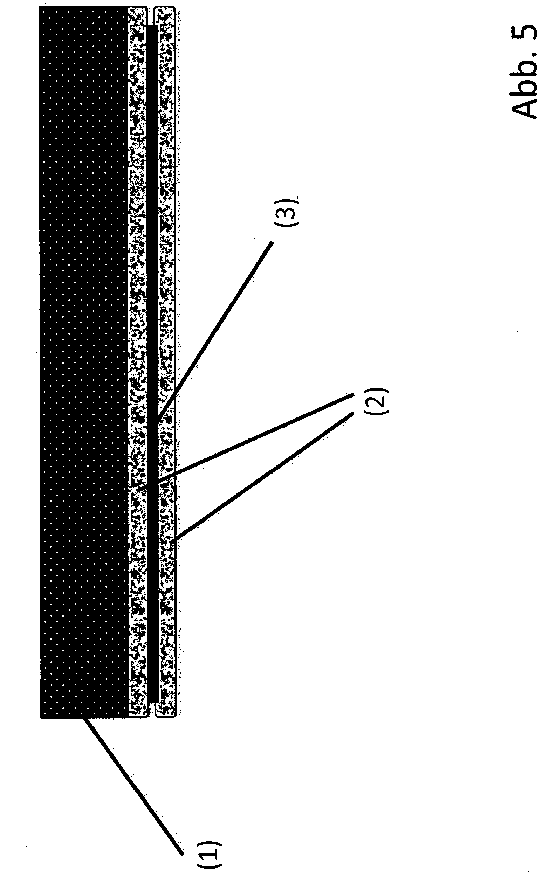

Abbildung 5 zeigt einen Balken aus Stahl (1) mit einer untergeklebten Schicht aus Stein (2) und einer ebenfalls darunter durch Klebung befestigten Schicht Carbonfasern (3). Der Stahlträger (1) kann sich bei Temperaturänderung durch die hohe Elastizität eines geeigneten Steinmaterials ausdehnen, ohne dass die Carbonschicht sich vom Stein ablöst und ohne dass sich der Stahlbalken biegen muss, wenn er zum Beispiel im Fall eines Auflagers an beiden Enden durch sein Eigengewicht eine Biegekraft in die entgegengesetzte Richtung erfährt. Durch die die Ausdehnung das Stahlteils ausgleichende Steinschicht kann der Stahlbalken gerade bleiben, ohne von der stabilisierenden Carbonschicht abzureißen.

In allen Fällen können die matrixgebundenen Lang-Faserschichten aus Carbonfasern, Glasfasern oder Steinfasern, oder einem Gemisch aus diesen Fasern bestehen und idealerweise das Steinmaterial unter Vorspannung halten, so wie in der EP 08 850 003.8 beschrieben. Idealer Kraftschluss zwischen Zement und Stein ist dann hergestellt, wenn der Stein eine rauhe Oberfläche hat und idealerwiese keine vollständig lineare Form aufweist, also etwa in regelmäßigen Abständen auf beiden Seiten oder den Oberflächen Nuten aufweist und/oder gegebenenfalls eine Wellenform besitzt, die den Kraftschluss zwischen Stein und Beton erhöht und eine Streckung der Faser erlaubt. Die Matrix, welche die Verbindung zwischen den Fasern und dem Steinmaterial schafft, besteht entweder aus Kunstharzen oder Wasserglasbasierten Bindemitteln, auch hier ist eine raue Steinoberfläche hilfreich. Als Fasern kommen alle hoch-zugfesten Lang-Fasern zum Einsatz, die für die Bewehrung von Beton als Ersatz von Stahl in Frage kommen, dazu gehören insbesondere Carbonfasern, jedoch auch hochsteife Glasfasern und Steinfasern oder unter Umständen auch Naturfasern oder ein Gemisch aus diesen Fasern.

Wenn die Carbonfasern oder auch Hanffasern aus Biomasse hergestellt werden und damit eine negative CO₂ Bilanz aufweisen, dann kann dem Klimaschutz zugearbeitet werden, indem Stahl mit einer positiven CO₂-Bilanz ersetzt wird. Idealerweise kommen hier dann auch zementbasierte Materialien zum Einsatz, die geringe CO₂-Emissionen verursachen oder künftig für die Dauer des Lebenszyklus auch CO₂-negativ hergestellt sind.

## Patentansprüche

1. Anordnung mit einer Platte oder einem Block oder einer wie auch immer gearteten Geometrie eines Bauteils aus Beton, Zement-basierem Mineral oder Stahl, der mit Hilfe von Fasermaterialien stabilisiert ist, **dadurch gekennzeichnet, dass** als Zwischenschicht zwischen Beton, Zementbasiertem Mineral oder Stahl und dem Fasermaterial ein Steinmaterial mit einem Temperatur-Ausdehnungskoeffizienten eingesetzt wird, der zwischen dem Temperatur-Ausdehnungskoeffizient des jeweils verwendeten Betons oder Stahls und dem Ausdehnungskoeffizient der jeweils verwendeten Faser liegt.

2. Anordnung nach Anspruch 1, **dadurch gekennzeichnet, dass** der Stein ein Naturstein, Kunststein oder Keramik ist.

3. Anordnung nach Anspruch 1 und 2, **dadurch gekennzeichnet, dass** die den Stein stabilisierenden Faser entweder Carbonfasern, Glasfasern, Steinfasern oder Naturfasern oder ein Gemisch aus diesen Fasern sind.

4. Anordnung nach Anspruch 1 bis 3, **dadurch gekennzeichnet, dass** die Steinschichten durch die Faser vorgespannt sind.

5. Anordnung nach Anspruch 1 bis 4, **dadurch gekennzeichnet, dass** die Fasern mit Harz oder. Wasserglas gebunden und mit dem Stein verbunden sind.

6. Anordnung nach Anspruch 1 bis 5, **dadurch gekennzeichnet, dass** die Faser-Steinstrukturen im Beton vergossen sind.

7. Anordnung nach Anspruch 1 bis 6, **dadurch gekennzeichnet, dass** die Faser-Steinstrukturen an der Oberfläche von Beton- oder Stahl-Strukturen angebracht sind.

8. Anordnung nach Anspruch 1 bis 7, **dadurch gekennzeichnet, dass** die Steinplatten oder Steinstäbe eine rauhe Oberfläche haben.

9. Anordnung nach Anspruch 1 bis 8, **dadurch gekennzeichnet, dass** die Steinstäbe eine nichtlineare Form aufweisen.

10. Anordnung nach Anspruch 9, **dadurch gekennzeichnet, dass** die Steinstäbe eine Wellenform aufweisen.

11. Anordnung nach Anspruch 1 bis 10, **dadurch gekennzeichnet, dass** die Steinstäbe oder Steinplatten in bestimmten Abständen Nuten, Kerben oder Vertiefungen aufweisen, die den Kraftschluss zwischen Stein und Beton oder Zement verbessern.

## Claims

1. Arrangement with a plate or a block or whatever geometry of a component made of concrete, cement-based mineral or steel, which is stabilized with the help of fiber materials, **characterized in that** an intermediate layer of a stone material is placed between the concrete, cement-based mineral or steel and the fiber material, with a coefficient of thermal expansion oft he stone material, which lies between the coefficient of thermal expansion of the concrete or steel and the coefficient of expansion of the respective fiber being used.

2. Arrangement according to claim 1, **characterized in that** the stone is a natural stone, artificial stone or ceramic.

3. Arrangement according to claim 1 and 2, **characterized in that** the fiber stabilizing the stone is either carbon fibers, glass fibers, stone fibers or natural fibers or a mixture of these fibers.

4. Arrangement according to claims 1 to 3, **characterized in that** the stone layers are prestressed by the fiber.

5. Arrangement according to claims 1 to 4, **characterized in that** the fibers are bound with resin or water glass and at the same time connected by those to the stone.

6. Arrangement according to claims 1 to 5, **characterized in that** the fiber stone structures are cast into the concrete.

7. Arrangement according to claims 1 to 6, **characterized in that** the fiber-stone structures are attached to the surface of concrete or steel structures.

8. Arrangement according to claims 1 to 7, **characterized in that** the stone slabs or stone bars have a rough surface.

9. Arrangement according to claims 1 to 8, **characterized in that** the stone bars have a non-linear shape.

10. Arrangement according to claim 9, **characterized in that** the stone bars have a waved shape.

11. Arrangement according to claims 1 to 10, **characterized in that** the stone bars or stone slabs have grooves, notches or depressions at certain intervals which improve the adhesion between stone and concrete or cement.

## Revendications

1. Agencement avec une plaque ou un bloc ou quelle que soit la géométrie d'un élément en béton, à base de ciment minéral ou en acier, stabilisé à l'aide de matériaux fibreux, **caractérisé en ce qu'**une couche intermédiaire d'un matériau pierreux est placée entre le le béton, le minéral à base de ciment ou l'acier et le matériau fibreux, avec un coefficient de dilatation thermique du matériau pierreux qui se situe entre le coefficient de dilatation thermique du béton ou de l'acier et le coefficient de dilatation de la fibre respective utilisée.

2. Agencement selon la revendication 1, **caractérisé en ce que** la pierre est une pierre naturelle, une pierre artificielle ou une céramique.

3. Agencement selon la revendication 1 et 2, **caractérisé en ce que** la fibre stabilisant la pierre est soit des fibres de carbone, des fibres de verre, des fibres de pierre ou des fibres naturelles ou un mélange de ces fibres.

4. Agencement selon les revendications 1 à 3, **caractérisé en ce que** les couches de pierre sont précontraintes par la fibre.

5. Agencement selon les revendications 1 à 4, **caractérisé en ce que** les fibres sont liées avec de la résine ou du verre soluble et en même temps reliées par celles-ci à la pierre.

6. Aménagement selon les revendications 1 à 5, **caractérisé en ce que** les structures en pierre fibrée sont coulées dans le béton.

7. Agencement selon les revendications 1 à 6, **caractérisé en ce que** les structures en fibre de pierre sont fixées à la surface de structures en béton ou en acier.

8. Aménagement selon les revendications 1 à 7, **caractérisé en ce que** les dalles de pierre ou barres de pierre présentent une surface rugueuse.

9. Agencement selon les revendications 1 à 8, **caractérisé en ce que** les barres de pierre ont une forme non linéaire.

10. Agencement selon la revendication 9, **caractérisé en ce que** les barres de pierre ont une forme ondulée.

11. Agencement selon les revendications 1 à 10, **caractérisé en ce que** les barres de pierre ou les dalles de pierre présentent à certains intervalles des rainures, des encoches ou des dépressions qui améliorent l'adhérence entre la pierre et le béton ou le ciment.
